Europäisches Patentamt

European Patent Office

Office européen des brevets

(19)

(11) **EP 1 641 114 A1**

(12) **EUROPEAN PATENT APPLICATION**

(43) Date of publication:
**29.03.2006 Bulletin 2006/13**

(51) Int Cl.:
***H02P 6/00*** *(2006.01)*

(21) Application number: **05020775.2**

(22) Date of filing: **23.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.09.2004 IT vi20040224**

(71) Applicant: **EARP S.p.A.**
**36024 Ponte di Nanto VI (IT)**

(72) Inventor: **Berto, Roberto**
**35043 Monselice**
**(Padova) (IT)**

(74) Representative: **Vannini, Mario**
**Maroscia & Associati S.r.l.**
**Contra' S. Caterina, 29**
**36100 Vicenza (IT)**

(54) **Method for determining the function of magnetic flux upon variation of the supply current of a synchronous reluctance motor**

(57) A method for determining the function of magnetic flux ($\lambda_d$, $\lambda_q$) upon variation of the supply current ($i_d$, $i_q$) of a synchronous reluctance motor (1) includes the steps of: A) mechanically connecting a rotor (2) of the reluctance motor (1) with a (1) drive motor (4) having a controlled speed; B) locating the axis of minimum reluctance (d) and the axis of maximum reluctance (q) for the rotor (2); C) driving the drive motor (4) to impart a desired rotational speed ($\omega_M$) to the motor (1); D) supplying the motor (1) with a supply current having a first and a second component ($i_{d1}$, $i_{q1}$); E) detecting at least once a first and a second component ($v_{d1}$, $v_{q1}$) of the supply voltage of the reluctance motor (1); F) repeating the current supply D) and detection steps E) with one of the two supply current components ($i_{d2}$, $i_{q2}$) reversed with respect to the previous value; G) calculating the magnetic flux ($\lambda_d$, $\lambda_q$) by using the average of the supply voltage values ($v_{d1}$, $v_{q1}$, $v_{d2}$, $v_{q2}$) detected in steps E) and F) to compensate for systematic errors caused by resistive losses, H) repeating the steps C) to G) for a plurality of supply current values ($i_d$, $i_q$) to determine the function of magnetic flux ($\lambda_d$, $\lambda_q$).

FIG.1

EP 1 641 114 A1

**Description**

Field of the Invention

This invention is generally directed to the field of electric drives and particularly relates to a method and equipment for magnetic characterization of a synchronous reluctance motor.

State of the Art

Synchronous reluctance motors have been greatly improved in recent years, and have been deeply changed in structure, so as to become competitive with conventional motors, and even exceed their general performances.

The operation principle of synchronous reluctance motors is based on the concept of the reluctance torque generated by the magnetic anisotropy of the rotor. In a synchronous reluctance motor, there is one direction of minimum reluctance d and one direction of maximum reluctance q for each pole pair.

It is known that suitable control techniques allow synchronous reluctance motors to be driven with a high precision with no need for position and speed sensors. These control techniques require the magnetic behavior of the motor to be characterized by using a model, which may be expressed by the curve of the magnetic flux $\lambda_q$ $(i_q, i_d)$ along the-axis of maximum reluctance q and of the magnetic flux $\lambda_d(i_q, i_d)$ along the axis of minimum reluctance d, as a function of the supply current $i_q$, $i_d$ to the motor, expressed in the reference system q, d.

The magnetic model generally results from laboratory tests with suitable measuring equipment. For the tests to be carried out, one or more operators have to connect the motor with the measuring equipment and to manually input relevant quantities while detecting relevant output quantities.

One drawback of this method for detecting the magnetic model of the motor is that additional equipment is required for the tests, which results in a cost increase and in a reduction of the actual possibility of carrying out the characterization procedure on a large number of motors. Furthermore, calibration requires the continuous intervention of at least one operator, and is a relatively long and expensive procedure.

It is also known that the magnetic flux $\lambda_q$, $\lambda_d$ may be determined indirectly, by making use of the model of the power supply circuit of the motor. When making measurements in substantially stationary operating conditions, and neglecting resistive losses, the magnetic flux $\lambda_q$, $\lambda_d$ may be determined by measuring the supply voltage in the reference system q, d and the rotational speed $\omega_M$.

A drawback of this measuring process is that resistive losses introduce systematic errors, which can falsify measurement results when not conveniently compensated for. This drawback is even exacerbated considering that the resistances in windings change with temperature and cannot be assumed as constant. Also, eddy currents in iron alter the relationship between magnetic flux and supply current.

Summary of the invention

A primary object of this invention is to obviate the above drawbacks, by providing a method that allows to characterize a synchronous reluctance motor in a precise and accurate manner.

A particular object is to provide a method that is cost-effective.

A further object of the invention is to provide a method that allows simple and fast implementation.

Another particular object is to provide a simple and fast method, allowing to extend the possibilities of implementation thereof to an increasing number of motors, with resulting quality advantages.

These objects, as well as other objects that will be more apparent hereafter, are fuffilled, according to claim 1, by a method for determining the function of magnetic flux with respect to supply current to a synchronous reluctance motor, of the type having a rotor with at least two axes of minimum and maximum magnetic reluctance, provides the steps of: A) mechanically connecting the rotor of the reluctance motor with a drive motor having a controlled speed; B) locating the axis of minimum reluctance (d) and the axis of maximum reluctance (q) for the rotor of the reluctance motor; C) driving the drive motor to impart a predetermined rotational speed to the reluctance motor; D) supplying the reluctance motor with a supply current comprised of a first and a second component, having predetermined values, along the respective axes of minimum and maximum reluctance; E) detecting at least once a first and a second component of the supply voltage of the reluctance motor along the respective axes of minimum and maximum reluctance; F) repeating the current supply D) and detection steps E) with one of the first and second supply current components reversed with respect to the previous value; G) calculating the magnetic flux by using the average of the supply voltage values detected in steps E) and F) to compensate for systematic errors caused by resistive losses; H) repeating the steps C) to G) for a plurality of supply current values to determine the function of magnetic flux.

Thanks to this particular sequence of steps, the magnetic flux function may be obtained in a fast and precise manner.

Brief Description of the Drawings

Further characteristics and advantages of the invention will be more apparent from the detailed description of a few preferred, non-exclusive embodiments of a method according to the invention, which are described as nonlimiting examples with the help of the annexed drawings, in which:

FIG. 1 is a schematic view of an apparatus for implementing a method according to the invention;
FIG. 2 shows an equivalent electrical model of a synchronous reluctance motor;
FIG. 3 shows a cutoff partial view of a rotor of a synchronous reluctance motor;
FIG. 4 shows a time diagram of supply current and voltage to the reluctance motor during implementation of a method according to the invention;
FIG. 5 shows a second time diagram of supply current and voltage to the reluctance motor during implementation of a method according to the invention;
FIG. 6 is a chart of the function of magnetic flux with respect to supply current;
FIG. 7 shows a vector diagram of supply current and voltage to the reluctance motor during implementation of a method according to the invention;
FIG. 8 shows a second equivalent electrical model of a synchronous reluctance motor;
FIG. 9 is a schematic view of a component of the apparatus as shown in FIG. 1;
FIG. 10 is a schematic view of a particular step of a method according to the invention;
FIG. 11 is a schematic view of a further step of a method according to the invention.

Detailed description of a preferred embodiment

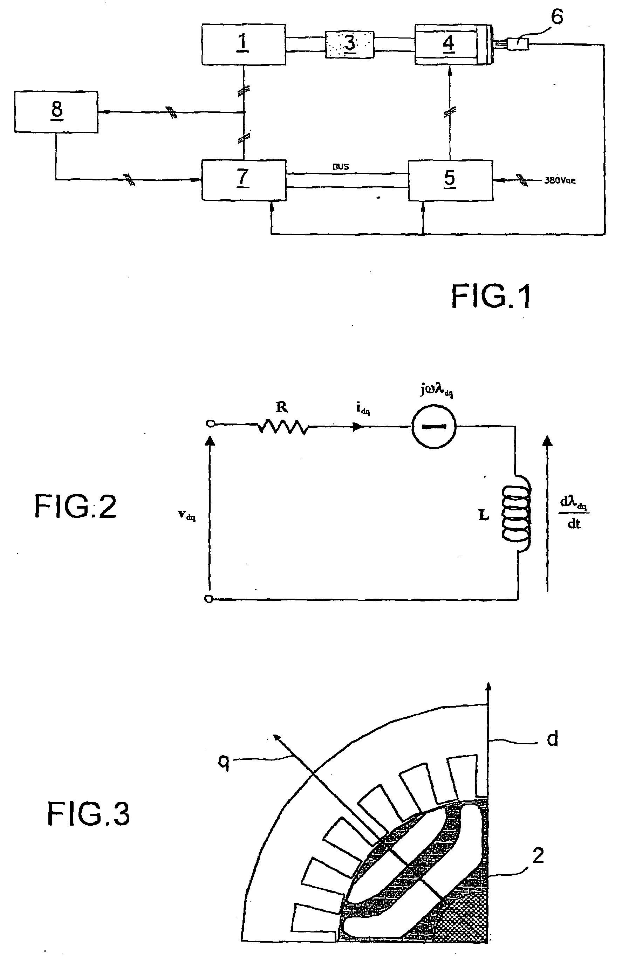

Particularly referring to the above figures, a method is described for determining the function of magnetic flux $\lambda_d$, $\lambda_q$ with respect to supply current $i_d$, $i_q$ to a synchronous reluctance motor 1. The motor comprises a rotor 2, having at least one pair of axes of minimum d and maximum magnetic reluctance q, as shown in FIG. 3. Both the magnetic flux $\lambda_d$, $\lambda_q$ and the supply current $i_d$, iq may be expressed in the movable reference system, integral with the rotor 2, which is defined by the axes d, q of minimum and maximum reluctance.

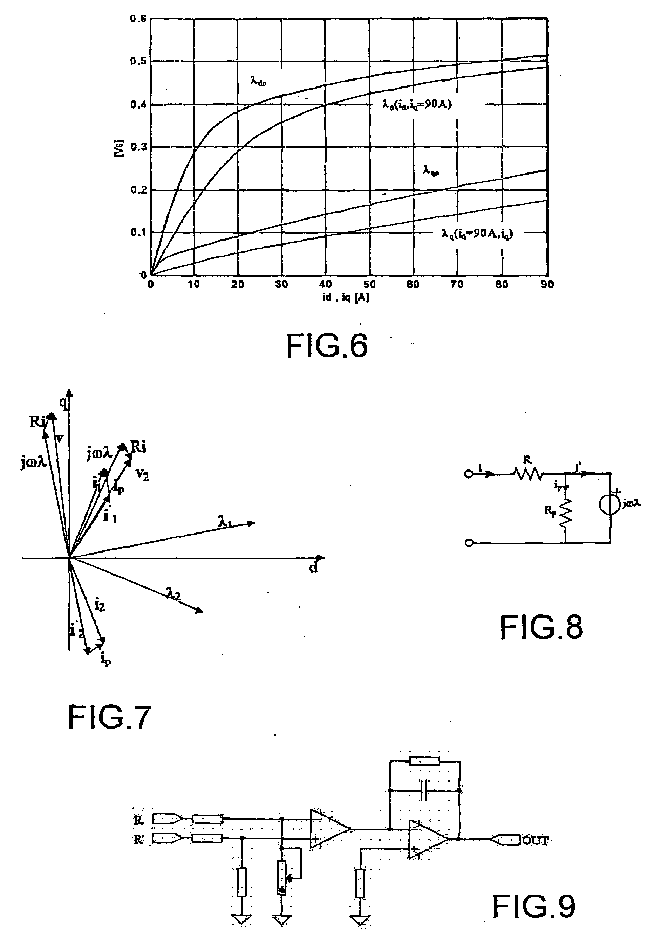

The main purpose is to obtain the two components of the magnetic flux function $\lambda_d(i_d, iq)$ for different values of the supply current components $i_d$, iq, that may be expressed by a plurality of curves like those shown in FIG. 6.

The method includes a first step A) in which the rotor 2 of the reluctance motor 1 is mechanically connected by averages of a joint 3 with a drive motor 4. This motor comprises a suitable drive 5 having a rotational speed control feature, and designed to drive the rotor 2 into rotation, while imparting thereto a rotational speed $\omega_m$ that is continuously variable in a predetermined range. Thus, a corresponding frequency $\omega_E = \omega_M n_P$ may be obtained, where $n_p$ is the number of pole pairs of the motor 1.

In a second step B), the axis d of minimum reluctance and the axis q of maximum reluctance of the rotor 2 of the motor 1 are located. Knowledge of the precise angular location of these two axes d, q is required to determine the proper power supply to the motor 1 during the next steps. In operation, this location step may be performed as follows. The motor 1 may be supplied with a direct current $i_d$, iq whose intensity is substantially half its nominal current $I_{nom}$. Under the action of the magnetic field $\lambda_d$, $\lambda_q$ and thanks to the magnetic anisotropy of the rotor 2, such rotor will rotate until it reaches an equilibrium position, in which the axis d of minimum reluctance lies in a predetermined position. This, by simply detecting the rotation accomplished by the rotor 2 to the equilibrium position, the angular position of the axis d of minimum reluctance relative to the starting position of the rotor 2 may be determined. The corresponding axis q of maximum reluctance may be determined thanks to the assumption that the two axes d, q are in phase quadrature with each other.

The position sensor 6 may be connected to the drive motor 4 and may be an optical encoder.

In a third step C), the drive motor 4 is driven in such a manner as to impart a predetermined rotational speed $\omega_M$ to the reluctance motor 1. More in detail, the rotational speed $\omega_M$ may be relatively low and preferably lower than 1500 rotations/min, to reduce eddy current noise. In certain cases, the value of 1500 rotations/min of such rotational speed $\omega_M$ may be exceeded. FIG. 8 shows an equivalent electrical model of the motor 1 in steady state, which highlights that the current $i'_d$, $i'_q$ that generates the magnetic flux differs from the supply current $i_d$, $i_q$ of the term $i_P$ due to losses in iron. By selecting a relatively low rotational speed $\omega_M$ the term $i_P$ may be neglected and $i'_d$, $i'_q = i_d$, iq may be assumed, as below.

In a fourth step D), the reluctance motor 1 is supplied with a supply current comprised of a first $i_d$ and second $i_q$ components, having predetermined values, along the respective axes of minimum and maximum reluctance d, q, whereas the motor 1 keeps on being driven with a rotational speed ($\omega_M$. More in detail, the supply current $i_d$, iq may be controlled by using a suitable inverter, which is part of the driver for the reluctance motor 1. The scheme of current control for the motor 1 is diagrammatically shown in FIG. 1.

The fifth step E) is for detecting the supply voltage to the motor, expressed by a first and second components $v_d$, $v_q$ along the respective axes of minimum and maximum reluctance d, q.

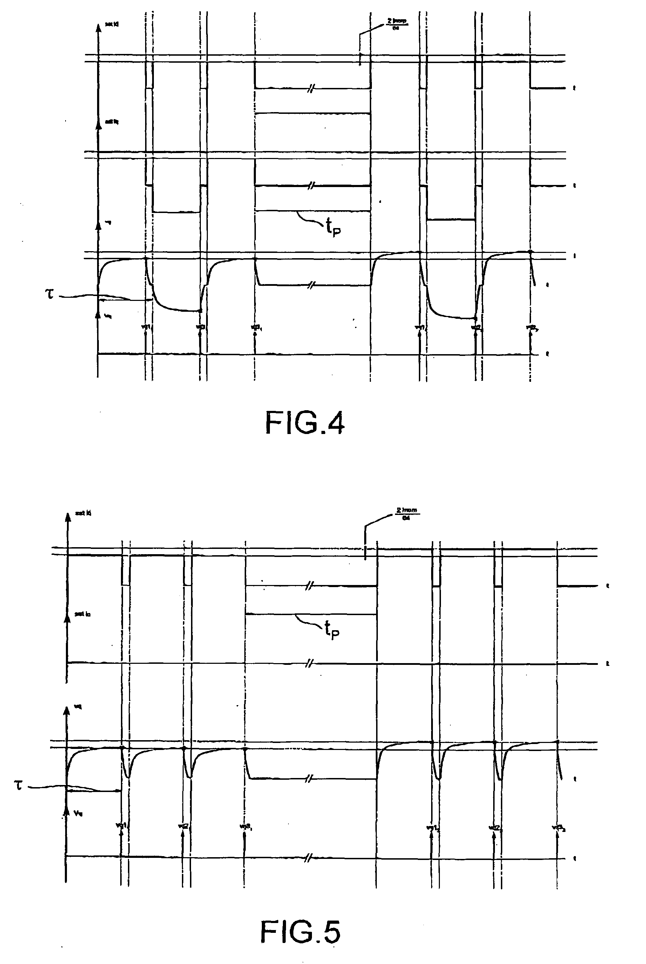

Particularly, the supply voltage $v_d$, $v_q$ may be detected after a predetermined delay $\tau$ with respect to the time at which the supply current $i_d$, iq is assigned the predetermined values, i.e. with respect to the start of the supply step D). This particular arrangement will allow the various dynamic effects being involved to reach a steady condition to help reducing any systematic error on the measurement of the supply voltage $v_d$, $v_q$. Thus, in step D) of current supply in components $i_d$, iq, appropriate stepped inputs may be assigned, with intensities corresponding to the corresponding desired values, which may cause the corresponding voltage components $v_d$, vq to stabilize, as shown in FIG. 4 and FIG. 5, after a quantifiable time. Once the latter value is known, the value of the delay τ may be also suitably selected.

Once the voltage $v_d$, $v_q$ has been detected, in a later step F) the current supply step D) and the detection step E) are repeated with different values of supply current $i_d$, $i_q$. Particularly, hereafter $i_{d1}$, $i_{q1}$ will denote the supply current components that are used the first time that the step D) is carried out, and $v_{d1}$, $v_{q1}$ will denote the detected supply voltage components corresponding to current $i_{d1}$, $i_{q1}$. Furthermore, the supply current and voltage components that are used as the steps D) and E) are repeated will be denoted by $i_{d2}$, $i_{q2}$ and $v_{d2}$, $v_{q2}$ respectively.

Namely, during the repetition step F), one of the supply current components $i_{d2}$, $i_{q2}$ is reversed with respect to the previous value $i_{d1}$, $i_{q1}$. The selection of which of the current components $i_{d2}$, $i_{q2}$ is reversed depends on which flux component $\lambda_d$, $\lambda_q$ is to be calculated, as described hereafter.

In a later step G), the magnetic flux $\lambda_d$, $\lambda_q$ is determined, by using the average of the supply voltage values $v_{d1}$, $v_{q1}$, $v_{d2}$, $v_{q2}$ detected in steps E) and F). This allows to compensate for systematic errors caused by resistive losses.

Particularly, to determine a first component $\lambda_d$ of the magnetic flux along the axis of minimum reluctance d, a supply current may be used in the repetition step F), which has the first component $i_{d2}$ substantially equal to the previous value $i_{d1}$, i.e. $i_{d2} = i_{d1}$ and the second component $i_{q2}$ substantially reversed with respect to the previous value $i_{q1}$, i.e. $i_{q2} = - i_{q1}$. In this case, in the calculation step (G), the first component $\lambda_d$ of the magnetic flux can be determined using the following formula: $\lambda_d = [(V_{q1} + V_{q2})/2] / \omega_E$.

Therefore, the first component $\lambda_d$ of the magnetic flux may be calculated as a ratio of the average of the values detected in steps E) and F) of the second supply voltage component $v_{q1}$, $v_{q2}$ to the frequency $\omega_E = \omega_M n_p$.

Likewise, to determine a second component $\lambda_q$ of the magnetic flux along the axis of maximum reluctance q, a supply current may be used in the repetition step F), which has the first component $i_{d2}$ substantially reversed with respect to the previous value $i_{d1}$, i.e. $i_{d2} = - i_{d1}$ and the second component $i_{q2}$ substantially equal to the previous value $i_{q1}$, i.e. $i_{q2} = i_{q1}$. In this case, in the calculation step (G), the second component $\lambda_q$ of the magnetic flux can be determined using the following formula: $\lambda_q = - ((v_{d1} + v_{d2})/2] / \omega_E$.

Therefore, the second component $\lambda_q$ of the magnetic flux may be calculated as a ratio of the average of the values detected in steps E) and F) of the first supply voltage component $v_{d1}$, $v_{d2}$ to the frequency $\omega_E = \omega_M n_p$. Furthermore, as shown in the above formula, and unlike the calculation of the first component $\lambda_d$, the second component $\lambda_q$ may be calculated as a value opposite to that calculated before.

The formulas used in the calculation step G) allow to compensate for the systematic error occurring in the measurement due to resistive losses. From the equivalent electrical circuit as shown in FIG.2, which allows to modelize current supply to the motor 1, the following equation, expressed in complex terms, may be deduced: $\underline{v} = R \underline{i} + d\underline{\lambda}/dt + j \omega_E \underline{\lambda}$, where $j^2 = - 1$ ; $\underline{v} = v_d + j v_q$ ; $\underline{i} = i_d + j i_q$ ; $\underline{\lambda} = \lambda_d + j\lambda_q$.

Thanks to the introduction of the delay τ, the term $d\underline{\lambda}/dt$ may be neglected. Hence, with reference to the current values used in steps D) and F), the following may be obtained: $\underline{v}_1 = R \underline{i}_1 + j \omega_E \underline{\lambda}_1$, $\underline{v}_2 = R \underline{i}_2 + j \omega_E \underline{\lambda}_2$, as shown in the vector diagram of FIG.7.

Thanks to these complex expressions, when the first flux component $\lambda_d$ is to be calculated, the following scalar equations may be determined: $v_{q1} = R i_{q1} + {}_{\omega E} \lambda_{d1}$ $v_{q2} = R i_{q2} + {}_{\omega E} \lambda_{d2} = - R i_{q1} + {}_{\omega E} \lambda_{d2}$. The sum of the latter equations shows that the average flux value $(\lambda_{d1} + \lambda_{d2})/2$ is equal to $[(v_{q1} + v_{q2})/2] / \omega_E$, as mentioned above.

Likewise, when the second flux component $\lambda_q$ is to be calculated, the following scalar equations may be determined: $v_{d1} = R i_{d1} - \omega_E \lambda_{q1}$ $v_{d2} = R i_{d2} - \omega_E \lambda_{q2} = - R i_{d1} + \omega_E \lambda_{q2}$. The sum of the latter equations shows that the average flux value $(\lambda_{q1} + \lambda_{q2})/2$ is equal to - $[(v_{d1} + v_{d2})/2] / \omega_E$ $[(v_{q1} + v_{q2})/2] / \omega_E$, as mentioned above.

The above disclosure clearly shows that the calculation according to the invention provides compensation for resistive losses $R \underline{i}$, as well as accurate indirect flux measurement.

Thus, the value of the functions $\lambda_d(i_d, i_q)$, $\lambda_q(i_d, i_q)$ has been only determined for supply current values $i_{d1}$, $i_{q1}$. Therefore, to determine the whole curve of the magnetic flux function $\lambda_d(i_d, iq)$, $\lambda_q(i_d, iq)$, steps C) to G) are repeated in a step H), i.e. the above steps are repeated for a plurality of different supply current values $i_d$, iq. More in detail, an appropriate magnetic characterization of the motor 1 may be obtained by determining the curves of the magnetic flux $\lambda_d(i_d, i_q)$, $\lambda_q(i_d, i_q)$ in four particular cases:

- $\lambda_d(i_d, 0)$ with respect $i_d$ ;
- $\lambda_q(0, i_q)$ with respect to $i_q$ ;
- $\lambda_d(i_d, i_{q,max})$ with respect to $i_d$;
- $\lambda_q(i_{d,max}, iq)$ with respect to $i_q$, where $i_{d,max}$, $i_{q,max}$ are suitably selected as a function of the nominal current of the motor 1 to be characterized.

These four curves allow to determine the magnetic flux $\lambda_d(i_d, i_q)$, $\lambda_q(i_d, i_q)$ for general values of $i_d$, iq by interpolation.

Alternatively, as shown in FIG. 4, the method of the invention may include a further repetition of the supply step D) and the detection step e) after the step F). In this case, both supply current components, hereinafter denoted by $i_{d3}$, $i_{q3}$ may be substantially equal to the corresponding components $i_{d1}$, $i_{q1}$ that are used the first time that step D) is carried out, i.e. $i_{d3} = i_{d1}$, $i_{q3} = i_{q1}$. Exactly as described above, the two supply voltage components may be also detected in this further repetition and will be denoted by $v_{d3}$, $v_{q3}$.

In this case, in the calculation step G), the components of the magnetic flux $\lambda_d$, $\lambda_q$ may be calculated by using a average of the voltage values $v_{d1}$, $v_{q1}$, $v_{d2}$, $v_{q2}$ detected in steps E) and F), as well as the values $v_{d3}$, $v_{q3}$ detected in the additional repetition step. Particularly, the average of the values $v_{d1}$, $v_{q1}$, $v_{d2}$, $v_{q2}$, $v_{d3}$, $v_{q3}$ may be a weighted average and the values $v_{d2}$, $v_{q2}$, detected in step F) may have a heavier weight, e.g. twice as heavy, than those of the remaining values $v_{d1}$, $v_{q1}$, $v_{d3}$, $v_{q3}$. Therefore, exactly as mentioned above, the flux components $\lambda_d$, $\lambda_q$ may be calculated with the following formulas:

$$\lambda_d = [(v_{q1} + 2\,v_{q2} + v_{q3})/4]\,/\,\omega_E$$

$$\lambda_q = -\,[(v_{d1} + 2\,v_{d2} + v_{d3})/4]\,/\,\omega_E\,.$$

The additional repetition of the supply step D) and the detection step E) further allows to compensate any temperature changes that may occur between the detection of $v_{d1}$, $v_{q1}$ and the detection of $v_{d2}$, $v_{q2}$ due to the possibly high current values $i_{d1}$, $i_{q1}$, $i_{dz}$, $i_{q2}$ in use. Therefore, the detection of $v_{d3}$, $V_{q3}$ provides a more reliable value of $v_d$, $v_q$.

In operation, three successive steps may be provided for each pair of supply current values $i_d$, $i_q$, corresponding to the values $i_{d1}$, $i_{d2}$, $i_{d3}$ of the first component and to the values $i_{q1}$, $i_{q2}$, $i_{q3}$ of the second component, as shown in FIG. 4, regarding the calculation of the first magnetic flux component $\lambda_d$. For each current step, the corresponding supply voltage $v_d$, $V_q$ may be detected after the delay $\tau$. Once the three detections have been completed, an idle time $t_p$ may be set to be longer than the duration of each current step, during which the motor 1 is not supplied with current. After such idle time $t_p$, the steps C) to G) are repeated, as provided by step H), and three more successive current steps $i_d$, $i_q$, with different intensities are set, to determine the flux $\lambda_d$, $\lambda_q$ corresponding to these new current values $i_d$, $i_q$. Conveniently, as shown in FIG. 4 and FIG. 5, after each idle time $t_p$, the current $i_d$, $i_q$ may be increased by $2\,I_{nom}\,/\,64$, where $I_{nom}$ is the nominal current.

In the particular case that the flux $\lambda_d(i_d, 0)$, $\lambda_q(0, i_q)$ is to be determined with one of the two current components substantially null, the sequence of current steps $i_d$, iq as shown in FIG. 5 may be followed.

Conveniently, the steps from the detection step B) to the repetition step H) may be carried out by one control unit 7, which may include a microcontroller and/or a dsp, and may be integrated with or separated from the reluctance motor 1. This control unit may be designed to perform all the control tasks on the motor 1. A signal conditioning unit 8 may be further provided, which is schematically shown in FIG. 1 and FIG. 9, which can adapt the supply voltages for further acquisition thereof by the control unit 7. The use of one control unit 7 will allow an easy and fast implementation of the method, and extend its potential application.

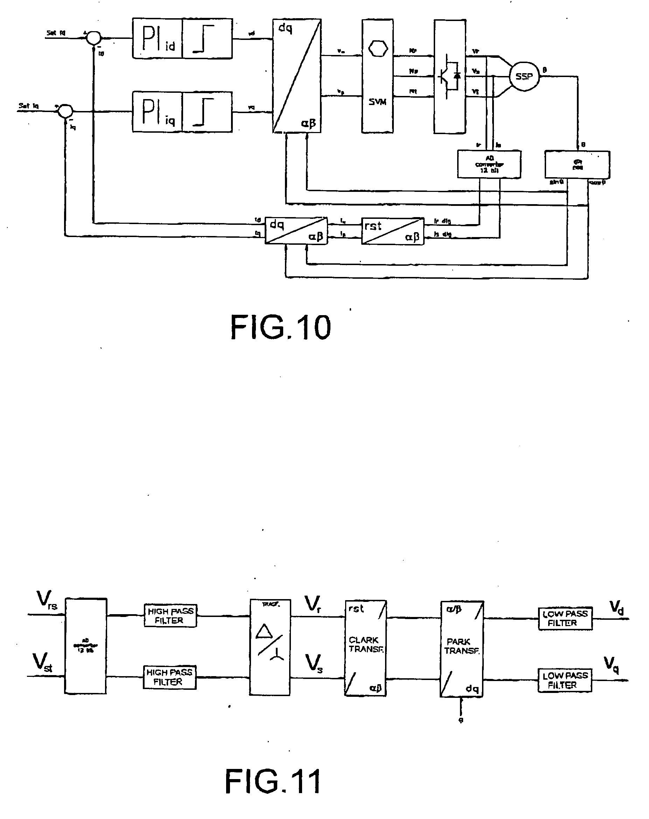

More in detail, the voltage values $v_d$, $v_q$ may result from the following operations, that are schematically shown in FIG. 11. When the line voltages $V_{rs}$, $V_{st}$ of the reluctance motor 1 have been appropriately adapted to the signal conditioning unit 8, they are sampled at a suitable sampling rate by an analog-to-digital converter and are filtered by a high-pass filter to remove any offset. Then, the line voltages $V_{rs}$, $V_{st}$ are transformed into the star voltages $V_r$, $V_s$, which are used to determine the voltages $v_d$, $v_q$, by Clarke and Park transforms, and by a low-pass filter. These operations, that are shown in FIG. 11 may be implemented in the control unit 7.

The above method may be carried out by an-appropriate program, adapted to implement the method steps in the control unit 7.

The program has a subprogram for locating the axis d of minimum reluctance and the axis q of maximum reluctance of the rotor 2 of the reluctance motor 1. This subprogram is designed to perform the step B) of the inventive method.

A subprogram is further provided for supplying the reluctance motor 1 with a supply current, comprised of a first $i_d$ and second $i_q$ components, having predetermined values, along the respective axes of minimum and maximum reluctance d, q.

Another subprogram is assigned the task of detecting a first and a second components $v_d$, $v_q$ of the supply voltage components to the motor, along the respective axes of minimum and maximum reluctance d, q.

At a higher level as compared with the three subprograms mentioned above, there is provided a control subprogram, which is designed to execute the current supply subprogram a plurality of times with different values $i_{d1}$, $i_{q1}$, $i_{d2}$, $i_{q2}$, $i_{d3}$, $i_{q3}$ for the first and second current components and simultaneously execute the detection subprogram to obtain a plurality of supply voltage values $v_{d1}$, $v_{q1}$, $v_{d2}$, $v_{q2}$, $V_{d3}$, vq3.

A subprogram is also provided for calculating the magnetic flux $\lambda_d$, $\lambda_q$, which comprises the calculation of the average of the supply voltage values $v_{d1}$, $v_{q1}$, $v_{d2}$, $v_{q2}$, $v_{d3}$, $v_{q3}$ detected by the detection subprogram.

According to certain embodiments, the above program can be designed to be wholly implemented in one control unit 7.

The rotational speed imparted by the drive 5 to the drive motor 4 to obtain the desired rotational speed $\omega_M$ of the motor 1 may be set manually by an operator or automatically. In the latter case, a subprogram may be used for controlling the drive motor 4, which can communicate with the drive 5 and impart the desired speed thereto. The subprogram for controlling the drive motor 4 may be also implemented in the control unit 7.

The above disclosure clearly shows that the method of the invention fulfills the proposed objects and particularly provides a precise magnetic characterization of the reluctance motor by determining in a fast and effective manner the function of magnetic flux with respect to the supply current.

The method and program of this invention are susceptible to a number of changes or variants, within the inventive concept disclosed in the annexed claims. All the details thereof may be replaced by other technically equivalent parts, and the materials may vary depending on different needs, without departure from the scope of the invention.

While the method and program have been described with particular reference to the accompanying figures, the numerals referred to in the disclosure and claims are only used for the sake of a better intelligibility of the invention and shall not be intended to limit the claimed scope in any manner.

**Claims**

1. A method for determining the function of magnetic flux ($\lambda_d$, $\lambda_q$) upon variation of the supply current ($i_d$, $i_q$) of a synchronous reluctance motor (1), of the type having a rotor (2) with at least two axes (d, q) of minimum and maximum magnetic reluctance and a predetermined number of pole pairs, including the steps of:

   A) mechanically connecting a rotor (2) of the reluctance motor (1) with a (1) drive motor (4) having a controlled speed;
   B) locating the axis of minimum reluctance (d) and the axis of maximum reluctance (q) for the rotor (2) of the reluctance motor (1);
   C) driving said drive motor (4) to impart a predetermined rotational speed ($\omega_M$) to said reluctance motor (1);
   D) supplying the reluctance motor (1) with a supply current, comprised of a first and a second component ($i_{d1}$, $i_{q1}$), having predetermined values, along the respective axes of minimum and maximum reluctance (d, q);
   E) detecting at least once a first and a second component ($V_{d1}$, $V_{q1}$) of the supply voltage of the reluctance motor (1), along the respective axes of minimum and maximum reluctance (d, q).
   F) repeating said current supply step D) and detection step E) with one of said first and second supply current components ($i_{d2}$, $i_{q2}$), reversed with respect to the previous value;
   G) calculating the magnetic flux ($\lambda_d$, $\lambda_q$) by using the average of the supply voltage values ($v_{d1}$, $v_{q1}$, $v_{d2}$, $v_{q2}$) detected in said steps E) and F) to compensate for systematic errors caused by resistive losses;
   H) repeating the steps C) to G) for a plurality of supply current values ($i_d$, iq) to determine said function of magnetic flux ($\lambda_d$, $\lambda_q$).

2. A method as claimed in claim 1, **characterized in that** a supply current (id2, iq2) is used in the repetition step F), which has said first component ($i_{d2}$) substantially equal to the previous value ($i_{d1}$), and said second component ($i_{q2}$) substantially reversed with respect to the previous value ($i_{q1}$).

3. A method as claimed in claim 2, **characterized in that**, in said calculation step G), a first component ($\lambda_d$) of said magnetic flux along said axis (d) of minimum reluctance, is determined as a ratio of the average value ($v_{q1}$, $v_{q2}$) detected in steps E) and F) of said second supply voltage component to a frequency ($\omega_E$) obtained by multiplying said rotational speed ($\omega_M$) by the number of pole pairs (np).

4. A method as claimed in claim 1, **characterized in that** a supply current ($i_{d2}$, $i_{q2}$) is used in said repetition step F), which has said first component ($i_{d2}$) substantially reversed with respect to the previous value ($i_{d1}$), and said second component ($i_{q2}$) substantially equal to the previous value ($i_{q1}$).

5. A method as claimed in claim 4, **characterized in that**, in said calculation step G), a second component ($\lambda_q$) of said magnetic flux along said axis (q) of maximum reluctance, is determined as a ratio of the average value ($V_{d1}$, $V_{d2}$) detected in steps E) and F) of said first supply voltage component to a frequency ($\omega_E$) obtained by multiplying said rotational speed ($\omega_M$) by the number of pole pairs ($n_p$).

6. A method as claimed in claim 5, **characterized in that** said second magnetic flux component ($\lambda_q$) is calculated as a value opposite to said ratio.

7. A method as claimed in claim 1, **characterized in that** it includes a further repetition of the supply step D) and the detection step E) after said step F), substantially with the same supply current ($i_{d1}$, $i_{q1}$) as in the previous step D).

8. A method as claimed in claim 7, **characterized in that** in said calculation step G), said average value is determined among the values ($v_{d1}$, $v_{q1}$, $v_{d2}$, $v_{q2}$) detected in said steps E) and F), as well as those detected in said additional repetition step ($v_{d3}$, $v_{q3}$).

9. A method as claimed in claim 8, **characterized in that** in said calculation step G), said average is a weighted average, the values ($v_{d2}$, $v_{q2}$) detected in said step F) having a heavier weight than those of the remaining values ($v_{d1}$, $v_{q1}$, $v_{d3}$, $v_{q3}$).

10. A method as claimed in claim 9, **characterized in**

**that** in said weighted average, the values ($v_{d2}$, $v_{q2}$) detected in said step F) have a weight that is twice as heavy than those of the remaining values ($v_{d1}$, $v_{q1}$, $v_{d3}$, $v_{q3}$).

11. A method as claimed in claim 1, **characterized in that** said step E) detects the supply voltage ($v_d$, $v_q$) after a predetermined delay ($\tau$) with respect to the start of the current supply step D) with a corresponding current ($i_d$, iq) having a predetermined value.

12. A method as claimed in claim 1, **characterized in that** said locating step B) involves supplying the reluctance motor (1) with a direct current whose intensity is substantially half the nominal current ($I_{nom}$) until an equilibrium position is reached, which is detected by a position sensor.

13. A method as claimed in claim 1, **characterized in that** said rotational speed ($\omega_M$) is relatively low and preferably lower than 1500 rotations/min, to reduce eddy current noise.

14. A method as claimed in claim 1, **characterized in that**, in said current supply step D), current ($i_d$, iq) is controlled by an inverter.

15. A method as claimed in claim 1, **characterized in that** said steps from the detection step B) to the repetition step H) are carried out by one control unit (7), adapted to perform all the control tasks on the reluctance motor (1).

16. A program for determining the function of magnetic flux ($\lambda_d$, $\lambda_q$) with respect to supply current ($i_d$, iq) to a synchronous reluctance motor (1), for carrying out the method as claimed in one or more of the preceding claims, including:

    - a subprogram for locating the axis-of minimum reluctance (d) and the axis of maximum reluctance (q) for the rotor (2) of the reluctance motor (1);
    - a subprogram for supplying said reluctance motor (1) with a supply current, comprised of a first and a second component ($i_{d1}$, $i_{q1}$), having predetermined values, along the respective axes of minimum and maximum reluctance (d, q);
    - a subprogram for detecting at least once a first and a second component ($v_{d1}$, $v_{q1}$) of the supply voltage of the reluctance motor (1), along the respective axes of minimum and maximum reluctance (d, q).
    - a control subprogram, which is designed to execute said current supply subprogram a plurality of times with different values $i_{d1}$, $i_{q1}$, $i_{d2}$, $i_{q2}$, $i_{d3}$, $i_{q3}$ for said first and second current components and simultaneously execute said detection subprogram to obtain a plurality of supply voltage values $v_{d1}$, $v_{q1}$, $v_{d2}$, $v_{q2}$, $v_{d3}$, $v_{q3}$:
    - a subprogram for calculating the magnetic flux ($\lambda_d$, $\lambda_q$), comprising the calculation of the average of the supply voltage values ($v_d$, $v_q$) detected by said detection subprogram to compensate for systematic errors caused by resistive losses.

17. A program as claimed in claim 16, **characterized in that** it may be wholly implemented in one control unit (7).

18. A program as claimed in claim 16, **characterized in that** it comprises a subprogram for controlling said drive motor (4) to automatically impart a predetermined rotational speed ($\omega_M$) to said reluctance motor (1).

FIG.1

FIG.2

FIG.3

FIG.4

FIG.5

FIG.6

FIG.7

FIG.8

FIG.9

FIG.10

FIG.11

**European Patent Office**

**EUROPEAN SEARCH REPORT**

Application Number

EP 05 02 0775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDRADA, P.; MARTINEZ, E.; PERAT, J.I.; SANCHEZ, J.A.; TORRENT, M.: "Experimental Determination of Magnetic Characteristics of Electrical Machines" CONFERENCE RECORD OF THE 2000 IEEE INDUSTRY APPLICATIONS CONFERENCE, vol. 1, October 2000 (2000-10), pages 263-268, XP002356674 * page 266, column 1; figures 1-5 * * page 264 * | 1 | H02P6/00 |
| X | * figures 1,2 * | 2-8, 12-15 | |
| Y | * figure 5 * | 9,10 | |
| X | * figure 5 * | 11 | |
| X | * page 266, column 1; figure 5 * | 16-18 | |
|  | ----- | | |
| Y | US 2004/100220 A1 (FU ZHENXING) 27 May 2004 (2004-05-27) * paragraph [0033] * | 9,10 | |
|  | ----- | | |
| Y | US 2003/015987 A1 (CHEONG DAL-HO ET AL) 23 January 2003 (2003-01-23) * paragraphs [0012], [0036] - [0044]; figures 2,3 * | 1-18 | TECHNICAL FIELDS SEARCHED (IPC) H02P |
|  | ----- | | |
| Y | STUMBERGER, G.; STUMBERGER, B.; DOLINAR, D.: "Identification of linear synchronous reluctance motor parameters" IEEE TRANSACTIONS ON INDUSTRY APPLICATIONS, vol. 40, no. 5, September 2004 (2004-09), pages 1317-1324, XP002356675 * figures 2,3,13,14 * | 1-18 | |
|  | ----- | | |

The present search report has been drawn up for all claims

| Place of search | Date of completion of the search | Examiner |
|---|---|---|
| Munich | 30 November 2005 | Kanelis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 02 0775

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2005

| Patent document cited in search report | Publication date | Patent family member(s) | Publication date |
|---|---|---|---|
| US 2004100220 A1 | 27-05-2004 | NONE | |
| US 2003015987 A1 | 23-01-2003 | CN 1396704 A | 12-02-2003 |
| | | DE 10230213 A1 | 06-02-2003 |
| | | GB 2379751 A | 19-03-2003 |
| | | JP 2003033096 A | 31-01-2003 |
| | | KR 2003005818 A | 23-01-2003 |

EPO FORM P0459